# EUROPEAN PATENT APPLICATION

(11) **EP 1 593 907 A1**
(43) Date of publication of application: **09.11.2005**
(21) Application number: 04703923.5
(22) Date of filing: 21.01.2004
(51) Int. Cl.: F21V 3/04, F21Y 103/00

(54) **DISPLAY PANEL**

(30) Priority: 23.01.2003 JP 2003015025
(71) Applicant: TORAY INDUSTRIES, INC., Tokyo 103-8666 (JP)
(72) Inventor: HATADA, Kenji, Ritto-shi, Shiga 5203035 (JP); MAEDA, Kiyoshige, Omihachiman-shi, Shiga 5230867 (JP); SUDA, Masahiro, Otsu-shi, Shiga 5200849 (JP)
(74) Representative: Coleiro, Raymond
(86) International application number: PCT/JP2004/000476
(87) International publication number: WO 2004/065845

(57) **Abstract**

A display panel wherein an electroconductive polymer layer is arranged between a display unit and a light source of a back light system. The electroconductive polymer layer makes it possible to make coloration or light scattering less than ITO or the like, and further prevent or decrease picture disturbances, such as flickering and stripe drifting, generated remarkably in high resolution pictures such as high-vision pictures, high speed movies, and displays corresponding to large screens by the action of electric waves radiated from the back light system, as noises, onto an operation circuit for the display. As the electroconductive polymer, the following is preferably used: i) a pyrrole, thiophene, furan, selenophene, aniline, para-phenylene or fluorene polymer or copolymer, or a derivative thereof; or ii)a polymer to which solubility or dispersibility is given by introducing a side chain into a thiophene, alkylfluorene, fluorene, para-phenylene or para-phenylenevinylene polymer or copolymer, or a derivative thereof.

## Description

### Technical Field of the Invention

This invention relates to a display panel used in a monitor of a personal computer, a television, or the like, more specifically, a display panel having a no emission type display unit and a back light system.

### Background Art of the Invention

In no emission type displays, such as a liquid crystal display, a back light system for forming pictures is necessary. However, in the back light system, a power supply for causing a light source to emit light is necessary, and electric waves radiated from this power supply circuit act as noise onto an operation circuit of the no emission type display unit so as to cause picture disturbances such as flickering and stripe drifting. Those troubles become remarkable in high resolution pictures such as high-vision pictures, high speed movies, or displays corresponding to large screens. For example, in liquid crystal displays, electric waves having a frequency of 10 to 100 kHz are radiated from an inverter power supply circuit of their cold cathode fluorescent lighting (CCFL), and the electric waves act as noise to produce a bad effect on the operation circuit of their liquid crystal display unit.

Conventionally, a great number of liquid crystal displays are small-sized, and a light source of their back light is arranged on the side face of a liquid crystal display unit. Further, the cold cathode fluorescent lighting thereof is surrounded by metal. Since electric waves radiated from the light source circuit of the back light are radiated in parallel to their display circuit, the waves produce a small effect on the display unit. However, on the basis of enlargement of the size of display screens and demands for high intensity, just-downward type back lights, wherein their light source is arranged under a display unit, have been developed. The effect given to the display unit by electric waves radiated from their back light source circuit has been unable to be ignored since the electric waves radiated from the circuit are emitted perpendicularly to their display unit circuit. The present problem has become more serious on the basis of shifts to larger screens, higher intensity which is inevitably required for larger screens, broader bands, and higher speed movies. As a means for solving a problem similar to this, there has been suggested a method of arranging a film on which ITO (a mixture of indium oxide and tin oxide) is vapor-deposited or sputtered (hereinafter referred to as an ITO film) between a display unit and a back light system (see, for example, Japanese Laid-Open Patent Publication No. H7-297591).

However, there remain the following problems: the ITO film has a high refractive index and absorptivity so that the light transmittance thereof becomes low. Thus, the quantity of light from the back light decreases so that the brightness thereof becomes low. If the thickness of the ITO film is made small, the light transmittance becomes high, but the surface resistivity becomes high at a large ratio. Therefore, if the light transmittance is high, the performance of shielding radiated electric waves is lost. For monitors or televisions, as compared to conventional liquid crystal displays, the vividness of pictures is the most important quality. Thus, decrease in brightness becomes a serious problem. Furthermore, the ITO film has a yellowish tinge. Therefore, the changes in color tone of images is also an important problem. It has been desired that these problems are solved. Moreover, in practical use, the price of ITO films is far higher than that of other members and, thus, the use thereof is restricted.

It would therefore be advantageous to provide a practical display panel which has a small decrease in light quantity from a back light, change in color tone of images, and yellowing, and further which has a display unit that is not affected by electric waves radiated from a back light source circuit.

### Disclosure of the Invention

This invention is a display panel wherein an electroconductive polymer layer, preferably an electroconductive polymer film on which an electroconductive polymer layer is stacked, is arranged between a display unit of a no emission type display and a light source of a back light system. The polymer film referred to herein may be a thick sheet-form member having a thickness of 500 µm or more besides any ordinary film. It is preferred to use, as the electroconductive polymer, i)a pyrrole, thiophene, furan, selenophene, aniline, para-phenylene or fluorene polymer or copolymer, or a derivative thereof; or ii) a polymer to which solubility or dispersibility is given by introducing a side chain into a thiophene, alkylfluorene, fluorene, para-phenylene, or para-phenylenevinylene polymer or copolymer, or a derivative thereof; or some other polymer.

### Brief Description of the Drawings

Fig. 1 is a schematic view of a display panel which is a structural example of the invention.
Fig. 2 is a schematic view of an electroconductive polymer layer having a light diffusion function.
Fig. 3 is a schematic view of an electroconductive polymer layer having a light diffusion function.
Fig. 4 is a schematic view of an electroconductive polymer layer having a light diffusion function.
Fig. 5 is a schematic view of an electroconductive polymer layer having a brightness enhancement function.

### Explanation of reference numbers

1 ... display unit of a display panel
2 ... optical film unit of a back light system of the display panel
3 ... a light source of the back light system of the display panel
4 ... reflective film unit of the back light system of the display panel
5 ... electroconductive polymer layer
6 ... resin layer made mainly of an electroconductive polymer
7 ... polymer film
8 ... light diffusion layer
9 ... brightness enhancement layer

### The Best Mode for carrying out the Invention

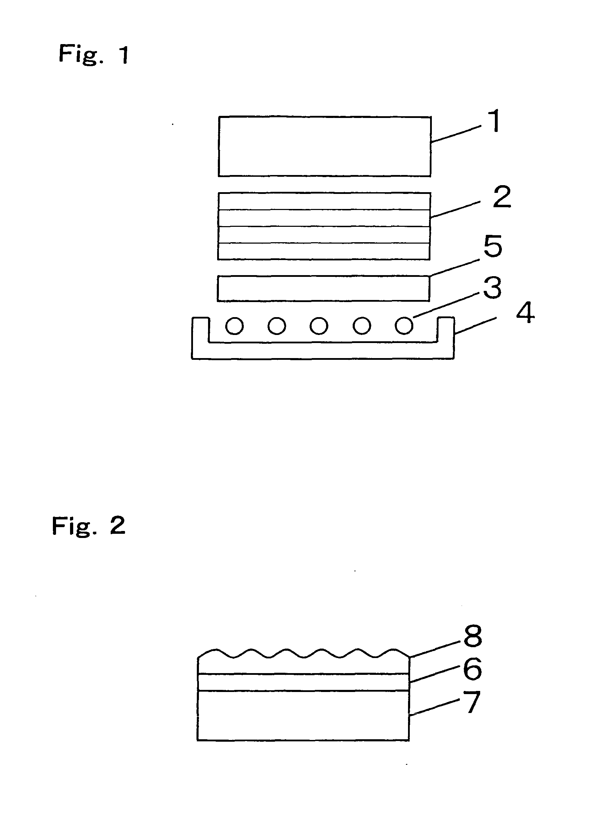

The invention will be described in detail by use of a schematic view as shown in Fig. 1 of a just-downward type lamp system which is a structural example of the display panel of the invention. The display panel is composed of a display unit (1), an optical film unit of a back light system (2), a light source (3), a reflective film unit (4), and an electroconductive polymer layer (5). In the case of a display panel using liquid crystals, the display unit (1) is usually composed of a polarizing plate (protective layer/TAC/PVA-iodine complex/TAC/adhesive layer/optical compensating plate), a liquid crystal unit (glass/color filter/ITO film/oriented film/liquid crystal/oriented film/TFT circuit/glass), and a polarizing plate (optical compensating plate/adhesive layer/TAC/PVA-iodine complex/TAC). The optical film unit of the back light system (2) is usually made of the following: light diffusion film/brightness enhancement film/brightness enhancement film (lens film)/light diffusion film, or the like. As the light source (3), a cold cathode fluorescent lighting (CCFL) is usually used. Light rays advancing in the direction opposite to the optical film unit (2), out of light rays radiated from the light source (3), are reflected on the reflective film unit (4) and radiated into the optical film unit to make the brightness high. In the display panel of Fig. 1, the electroconductive polymer layer (5) is arranged between the light source (3) and the optical film unit (2), to make it possible to shield radiated electric waves from the light source (3) and largely decrease the radiated electric waves emitted into the display unit (1). The position of the electroconductive polymer film (5) is not limited to the position shown in Fig. 1, and the film (5) may be set up between the optical film unit (2) and the display unit (1), or set up between the respective films of the optical film unit (2). Furthermore, the film (5) may be compounded with the respective films of the optical film unit (2), which will be described later.

The electroconductive polymer layer is an object having a resin layer made mainly of an electroconductive polymer.

In the case that the electroconductive polymer is colored, the light transmittance thereof may decrease, thereby decreasing the brightness of light radiated into the display unit (1) if the resin layer is made thick. Moreover, the electroconductive polymer itself is poor in flexibility. For these reasons, it is preferred that the electroconductive polymer layer is an electroconductive polymer film wherein a resin layer made mainly of an electroconductive polymer is stacked on at least one face of a polymer film. The use of the electroconductive polymer film causes fabrication of the display panel to be easier and heightens stability against bending generated by the shift of the display panel, and other effects.

The polymer film is not limited to any special kind, and is preferably a film made of a resin having a high transparency, such as polycarbonate, acrylic resin, or a polyester resin such as polyethylene terephthalate or polyethylene naphthalate. Of these, a polyethylene terephthalate film, which has heat resistance and excellent transparency, is more preferred. To improve the adhesiveness thereof to the electroconductive polymer, it is preferred to subject the polymer film beforehand to surface treatment, such as coating with an adhesive resin or discharge treatment, in the step of forming the film or after the film is formed. The electroconductive polymer layer may be stacked by coating after the polymer film is formed, or may be stacked by coating, coextrusion, or the like in the step of forming the polymer film (in the formation step). The polymer film may be a layer having another function such as a light diffusion action within the scope of the invention. Another layer may be stacked on the polymer film.

To obtain an effective shield performance, the surface resistivity of the electroconductive polymer is 1 × 10⁴ Ω/□ or less, preferably 5 × 10³ Ω/□ or less, more preferably 2 × 10³Ω/□ or less. To raise the brightness of images, it is preferred that the total light transmittance is higher. The total light transmittance is 80% or more, preferably 85% or more, more preferably 90% or more. The shield effect is better as the surface resistivity is lower. However, to make the surface resistivity low, it is necessary that the film thickness of the resin layer made mainly of the electroconductive polymer is made large. Thus, a problem arises in that the light transmittance decreases and decreases the brightness of light radiated into the display unit (1). It is therefore preferred to set the surface resistivity of the electroconductive polymer layer and the total light transmittance to 1 × 10⁴Ω/□ or less and 80% or more, respectively, more preferably 5 × 10³Ω/□ or less and 85% or more, more preferably 2 × 10³Ω/□ or less and 90% or more by the selection of the electroconductive polymer and appropriate adjustment of the thickness.

To decrease a change in color tone of light from the light source, it is preferred to select the electroconductive polymer and make appropriate the film thickness of the resin layer made mainly of the electroconductive polymer to set the spectral light transmittance at 400 nm wavelength to 85% or more. Electroconductive polymer is described in detail in "Account about Electroconductive Polymer" (written by Katsumi Yoshino, and published by the Nikkan Kogyo Shimbun, Ltd.), "Electroconductive Polymer" (edited by Naoya Ogata, and published by Kodansha Scientific), or Handbook on Conducting Polymer (written by Skotheim T. D., and published by Dekker Co.).

The electroconductive polymer of the invention is not limited to any kind, and is preferably one or more selected from polypyrrole, polythiophene, polyfuran, polyselenophene, polyaniline, poly-p-phenylene, polyfluorene or derivatives thereof, or copolymers of monomers of these, in view of transparency, electroconductivity, and flexibility.

The resin layer made mainly of the electroconductive polymer of the invention can be formed by a method of performing electrochemical polymerization or vapor-depositing the electroconductive polymer directly onto a film on which Pd, Pt or the like is sputtered, or some other method. The resin layer made mainly of one or more electroconductive polymers selected from derivatives of polythiophene, polyalkylfluorene, polyfluorene, poly-p-phenylene and poly-p-phenylenevinylene which each have solubility or dispersibility in a solvent or water by the introduction of a side chain, or copolymers of monomers of these is preferable since the resin layer is excellent in transparency and electroconductivity and further can be applied to a polymer film or a film having a different function to make it possible to uniformly form an electroconductive polymer film having an appropriate thickness. In particular, a polythiophene resin layer made mainly of an electroconductive polymer comprising polyethylenedioxythiophene, in particular, polyethylenedioxythiophene and polystyrenesulfonic acid is most preferable for the following reasons: the resin layer can easily be dissolved or dispersed in water or a solvent to be able to be easily applied to a polymer film. Further, a film which is particularly high in transparency and electroconductivity can be formed. The method for preparing the resin solution wherein the electroconductive polymer comprising polyethylenedioxythiophene and polystyrenesulfonic acid is dissolved or dispersed in water or a solvent is suggested in USP No. 5,300,575, JP-A No. H9-31222, and WO 02/067273 A1.

The thickness of the resin layer obtained after the water-soluble resin solution or the solution of the resin dissolved or dispersed in the solvent is applied and dried is preferably 60 nm or more and 300 nm or less. If the thickness is less than 60 nm, the surface resistivity is too high to give a sufficient effect of shielding radiated electric waves. If the thickness is more than 300 nm, the light transmittance becomes too low.

Light can be diffused and projection of the light source watching from front side of display panel can be decreased, by the addition of particles such as polystyrene particles or acrylic resin particles to the resin layer made mainly of the electroconductive polymer. Furthermore, it is possible to obtain the following effects since the skid resistance of the resin layer is reduced: an effect that at the time of cutting the film/sheet into a display screen size, the cut films or sheets can easily be stacked; and other effects.

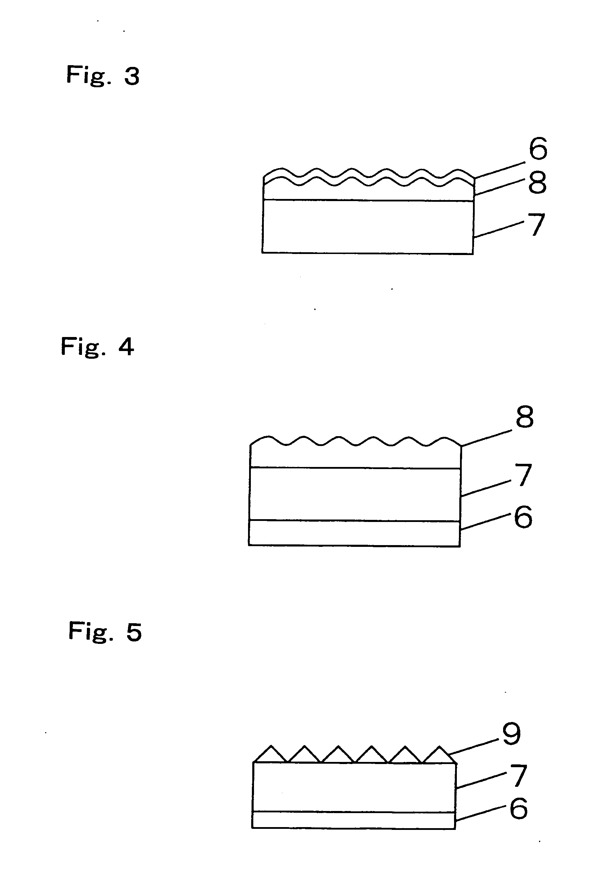

An electroconductive polymer layer wherein a resin layer made mainly of the electroconductive polymer of the invention is applied onto a light diffusion film (for example, Fig. 3) makes it possible that one of the films is removed from the structure of the display panel of Fig. 1, and has an advantage that a reduction in the brightness of light radiated into the display unit (1) is decreased and the number of steps for the fabrication is decreased. The light diffusion layer can also be stacked on an electroconductive polymer film (for example, Figs. 2 to 4). The resin composition of the light diffusion layer is not limited, and can be formed by dispersing particles, such as acrylic resin particles, styrene-based resin particles, nylon resin particles, silicone resin particles, urethane-based resin particles or ethylene-based resin particles, having an average particle diameter of 10.0 to 50.0 µm, and a coefficient variance of particle diameter distribution of less than 50.0%, into a layer of a resin such as acrylic resin, polyester resin, urethane-based resin, styrene-based resin, vinyl-based resin, ethylene-based resin, cellulose resin, amide-based resin, imide-based resin, phenol-based resin, silicone resin or fluorine-contained resin. In particular, acrylic resin, particularly, acrylic polyurethane resin is preferable since the resin is good in transparency. For the electroconductive polymer layer on which the light diffusion layer is stacked, it is preferred to adjust the total light transmittance thereof and the haze thereof to 70% or more and 80% or more, respectively, to decrease a reduction in the brightness.

As illustrated in, for example, Fig. 5, it is also permissible to form an electroconductive polymer layer onto the face opposite to a brightness enhancement layer made of a prism of a brightness enhancement film or the like.

The development of electroconductive polymer to a shield purpose has been investigated, but the electroconductivity was low so that a sufficient shield effect could not be obtained. Therefore, investigations to improve the electroconductivity by doping continued. However, there still has been a problem that if the amount of the doping is made large, the electro-conductive polymer loses flexibility so that the polymer cannot be worked.

In the past, attempts were made to develop electroconductive polymers for articles for electromagnetic interference shields. However, the electroconductivity thereof is far lower than that of metal. Consequently, necessary performance was not attained and the articles were not practical. However, we discovered that in the present display panel, electroconductive polymer can exhibit its property sufficiently for the following reasons: the polymer produces a sufficient shield effect even if it has a low electroconductivity since the frequency of the power supply is as low as 10-100 kHz; and the polymer can maintain necessary transparency.

The electroconductive polymer film/sheet can be produced at a rate of several tens of meters per minute by coating. Therefore, costs are lower and the possibility of actual use thereof is higher as the film/sheet is compared with ITO films produced by vapor deposition or sputtering at a rate of several meters per minute, using vacuum equipment.

The invention is not limited to a display panel of a just-downward type back light system, and can be applied to any display panel of an edge light type. For example, in the case that the electroconductive polymer layer is set on a light conducting plate, an effect of electric waves radiated from the light source can be made smaller.

### Examples

The invention will be described specifically and in detail by way of examples hereinafter.

### [Evaluation method]

1. Surface resistivity: measured by the four-terminal method.
2. Total light transmittance: measured in accordance with JIS-K 7105.
3. Spectral light transmittance at 400 nm wavelength: measured using a spectrophotometer U-3410 (manufactured by Hitachi Ltd.).
4. Shield effect: values at 1 MHz, 500 KHz and 300 KHz were extrapolated from data measured by the KEC method of (Corp.) Kansai Electric Industry Development Center, and then a value at 50 KHz was estimated.
5. Effect as a display panel (picture evaluation): A 20-inch liquid crystal television manufactured by Sharp Corp. was decomposed, and an electroconductive polymer film was set instead of an ITO film integrated therein. Thereafter, the television was again fabriccated, and test pattern signals were sent thereto so as to observe generation of noise, disturbances of pictures, and white balance.

### Example 1

One face of a polyethylene terephthalate film of 125 µm thickness was coated with a water dispersion of an electroconductive polymer made of polyethylenedioxythiophene and polystyrenesulfonic acid so as to yield a film (trade name: Orgacon TM EL-1500, manufactured by Agfa-Gevaert N. V.) on which the electroconductive polymer of 96 nm thickness was stacked.

Physical properties, and a picture evaluation result when the film was set to replace the ITO film put in the backlight system of the liquid crystal display therewith are shown in Table 1. The film was sandwiched between metal springs, and the metal springs were connected to a chassis through leads to connect the film to the ground. As shown in Table 1, in the display panel in which this film was set, pictures were not skewed, the white balance thereof was within a fine adjustment range, and yellowing was also slight.

### Example 2

The rear face (the face opposite to the electroconductive polymer layer face) of the film of Example 1 was coated with 170 parts of an acrylic polyol resin (solid content: 50%), 30 parts by weight of an isocyanate curing agent resin (solid content: 60%), and 200 parts of a resin solution having an average particle diameter of 18 µm and a coefficient variance of 25.6% (solvent: n-butyl acetate/MEK), to yield an electroconductive polymer film having a light diffusion layer the thickness of which was 36 µm after the layer was dried. This film was evaluated in the same way as in Example 1, and the results are shown in Table 1. As shown in Table 1, in the display panel in which this film was set, pictures were not skewed, the white balance thereof was within a fine adjustment range, and yellowing was also slight.

For reference, this film was set as follows: the light diffusion film and the ITO film at the lower stage of the optical film system (2) were taken off, and the above-mentioned film was set instead.

### Comparative Examples 1 and 2

ITO was sputtered onto a polyethylene terephthalate film of 125 µm thickness while the surface resistivity thereof was controlled to 330Ω/□. The ITO of the present film was coated with a fluorine-contained resin to yield an ITO film having an antireflective layer the thickness of which was 0.1 µm after the layer was dried. That polyethylene terephthalate film was evaluated in the same way as in Example 1, and the results are shown in Table 1.

### Examples 3, 4, 5 and 6, and Comparative Examples 3 and 4

In the process of producing the film, a polyester resin copolymerized with styrenesulfonic acid was applied and stacked onto one face of a polyethylene terephthalate film, then the film was drawn, to yield a polyester film of 125 µm thickness (manufactured by Toray Industries, Inc.). Then water dispersions of an electroconductive polymer made of polyethylenedioxythiophene and polystyrenesulfonic acid (trade name: Orgacon TM EL-1500, manufactured by Agfa-Gevaert N. V.), each polymer having different resistivity, was applied onto the polyester film, to form a film. This film was set to replace the ITO film put in the back light system of the liquid display in the same way as in Example 1 therewith. Results of the evaluation of pictures are shown in Table 1. The thickness of each of the electroconductive polymer layer was as follows: Example 3: 80 nm, Example 4: 50 nm, Example 5: 200 nm, Example 6: 280 nm, Comparative Example 3: 30 nm, and Comparative Example 4: 400 nm.

### Example 7

In the process of producing the film, a polyester resin copolymerized with styrenesulfonic acid was applied and stacked onto one face of a polyethylene terephthalate film, then the film was drawn, to yield a polyester film of 125 µm thickness (manufactured by Toray Industries, Inc.). A solution consisting of 100 parts by weight of solid contents of a water dispersion of an electroconductive polymer made of polyethylenedioxythiophene and polystyrenesulfonic acid (trade name: Orgacon TM EL-1500, manufactured by Agfa-Gevaert N. V.) and 0.2 part by weight of solid contents of a water dispersible silica sol (trade name: Snow Tex (transliteration) OL, manufactured by Nissan Chemical Industries, Ltd.) was applied onto the polyester film, to form a film wherein the thickness of the electroconductive polymer layer was 126 nm. This film was evaluated in the same way as in Example 3, and the results are shown in Table 1.

### Examples 8 and 9

In a vacuum of 0.3 Pa pressure, electric current was caused to flow into a rectangular parallelepiped carbon crucible which had a rectangular parallelepiped groove and was filled with polythiophene (Example 8) or polypyrrole (Example 9) to heat the carbon crucible, thereby vaporizing the polythiophene or the polypyrrole to be vapor-deposited onto one face of a polyethylene terephthalate film of 125 µm thickness. Properties of these films, wherein the electroconductive film was stacked (vapor-deposited), were evaluated in the same way as in Example 3, and the results are shown in Table 2.

### Industrial Applicability

The display panel of the invention, wherein a film/sheet on which an electroconductive polymer layer is stacked, is small in fall in brightness, change in color tone, and yellowing, and further disturbance of pictures is not generated.

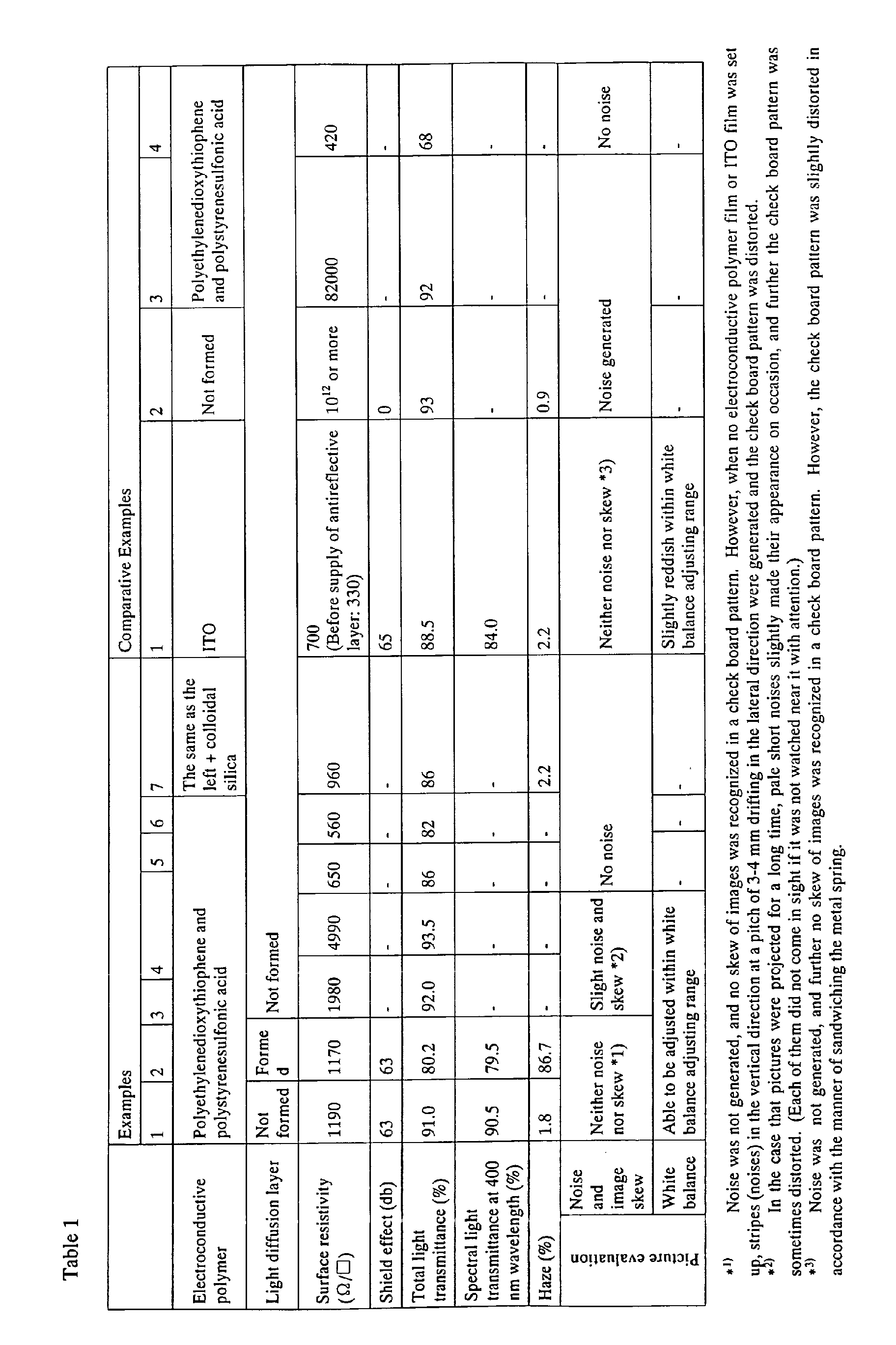

**Table 2**

| | | Examples | |
|---|---|---|---|
| | | 8 | 9 |
| Electroconductive polymer | | Polythiophene | Polypyrrole |
| Light diffusion layer | | Not formed | |
| Surface resistivity (Ω/□) | | 4200 | 6500 |
| Shield effect (db) | | - | - |
| Total light transmittance (%) | | 86 | 80 |
| Spectral light transmittance at 400 nm wavelength (%) | | - | - |
| Haze (%) | | - | - |
| Picture evaluation | Noise and image skew | Slight noise and skew *²⁾ | |
| | White balance | - | |

## Claims

1. A display panel, wherein an electroconductive polymer layer is arranged between a display unit and a light source of a back light system.

2. The display panel according to claim 1, wherein the electroconductive polymer layer is an electroconductive polymer layer stacked on a polymer film.

3. The display panel according to claim 1, wherein the surface resistivity of the electroconductive polymer layer is 1 × 10⁴Ω/□ or less, and the total light transmittance thereof is 80% or more.

4. The display panel according to claim 3, wherein the surface resistivity of the electroconductive polymer layer is 5 × 10³Ω/□ or less, and the total light transmittance thereof is 85% or more.

5. The display panel according to claim 1, wherein the spectral light transmittance at 400 nm wavelength of the electroconductive polymer layer is 85% or more.

6. The display panel according to claim 1, wherein an electroconductive polymer contained in the electroconductive polymer layer is a polymer selected from the following group i) or ii):
i) pyrrole, thiophene, furan, selenophene, aniline, para-phenylene and fluorene polymers or copolymers, or derivatives thereof; and
ii) polymers to which solubility or dispersibility is given by introducing a side chain into thiophene, alkylfluorene, fluorene, para-phenylene, and para-phenylenevinylene polymers or copolymers, or derivatives thereof.

7. The display panel according to claim 6, wherein the electroconductive polymer is a thiophene polymer or copolymer, or a derivative thereof.

8. The display panel according to claim 7, wherein the thiophene polymer or copolymer, or the derivative thereof is polyethylenedioxythiophene.

9. The display panel according to claim 6, wherein the electroconductive polymer layer further comprises polystyrenesulfonic acid.

10. The display panel according to claim 1, wherein the thickness of the electroconductive polymer layer is 60 nm or more and 300 nm or less.

11. The display panel according to claim 1, wherein particles are incorporated into the electroconductive polymer layer.

12. The display panel according to claim 1, which further comprises a layer having a light scattering performance.

13. The display panel according to claim 1, which further comprises a layer having a brightness enhancement performance.

14. The display panel according to claim 1, wherein the display unit is a display unit using liquid crystal and the back light system uses a cold cathode fluorescent lighting.

15. A back light system, which uses a cold cathode fluorescent lighting and has an arranged electroconductive polymer layer.
